# EUROPÄISCHE PATENTSCHRIFT

(11) **EP 2 083 207 B1**
(45) Veröffentlichungstag und Bekanntmachung des Hinweises auf die Patenterteilung: **03.08.2011**
(21) Anmeldenummer: 09000905.1
(22) Anmeldetag: 23.01.2009
(51) Int. Cl.: F16M 13/02

(54) **Vorrichtung, die sich dafür eignet, einen Bildschirm schwenkbar an einer Wand zu befestigen, sowie eine sich darauf beziehende Vorgehensweise**
Device suitable for attaching a pivoting monitor to a wall and corresponding procedure
Dispositif approprié à la fixation d'un écran sur un mur de manière pivotante, ainsi que procédé correspondant

(30) Priorität: 28.01.2008 NL 1034965
(43) Veröffentlichungstag der Anmeldung: 29.07.2009
(73) Patentinhaber: Vogel's Holding B.V., 5628 DB Eindhoven (NL)
(72) Erfinder: Luijben, Stefan Arthur, 5707 RZ Helmond (NL); Grolle, Paul Robbert, 5708 AB Helmond (NL)
(74) Vertreter: Dorna, Peter

(56) Entgegenhaltungen:
- DE-U1- 9 304 086
- US-A1- 2002 033 436
- US-A1- 2007 176 067

## Beschreibung

Die Erfindung bezieht sich auf eine Vorrichtung, die sich dafür eignet, einen Bildschirm schwenkbar an einer Wand zu befestigen, wobei die Vorrichtung mit einem an der Wand zu befestigenden Wandelement sowie mit einem Stützelement versehen ist, an dem der Bildschirm befestigt werden kann, wobei das Stützelement um eine Schwenkachse schwenkbar mit dem Wandelement verbunden ist, und wobei die Vorrichtung ferner mit einem schwenkbaren Verbindungsarm versehen ist, der das Wandelement und das Stützelement von der Schwenkachse beabstandet miteinander verbindet, wobei der Verbindungsarm mit einer Mehrzahl von Winkeleinstellaussparungen zum Einstellen eines gewünschten Schwenkwinkels zwischen dem Stützelement und dem Wandelement verbunden werden kann.

Die Erfindung bezieht sich ferner auf eine Vorgehensweise zum Verschwenken eines Stützelements gegenüber einem Wandelement um eine Schwenkachse, wobei ein Verbindungsarm, mit dem das Wandelement und das Stützelement von der Schwenkachse beabstandet miteinander verbunden sind, mit einer von einer Mehrzahl von Winkeleinstellaussparungen zum Einstellen eines gewünschten Schwenkwinkels zwischen dem Stützelement und dem Wandelement verbunden wird.

Bei einer solchen aus der US-Patentschrift US-B2-7.175.146 bekannten Vorrichtung und Vorgehensweise ist der Verbindungsarm um eine Gelenkachse mit dem Stützelement angelenkt verbunden. Eine von der Gelenkachse abgewandte Seite des Verbindungsarms liegt in einer der Winkeleinstellaussparungen. Indem der Bildschirm angeschoben wird, wird der Verbindungsarm mit einer höher gelegenen Winkeleinstellaussparung verbunden, wodurch der Schwenkwinkel verkleinert wird. Indem an dem Bildschirm gezogen wird, wird das Ende des Verbindungsarms zu einer niedriger gelegenen Winkeleinstellaussparung verschoben, wodurch der Schwenkwinkel vergrößert wird. Sowohl beim Verkleinern als auch beim Vergrößern des Schwenkwinkels ist es notwendig, auf den Bildschirm Kraft auszuüben, damit sich der Verbindungsarm aus der Winkeleinstellaussparung löst, wobei ein Widerstand überwunden werden muss. Ein Nachteil einer solchen Vorrichtung besteht darin, dass, wenn der Widerstand zu gering ist, das Stützelement mit dem daran befestigten Bildschirm unter Einfluss der Schwerkraft in einen größeren gewünschten Schwenkwinkel schwenken kann, ohne dass dies vom Nutzer gewünscht wird. Wenn der Widerstand zu groß ist, muss der Nutzer relativ viel Kraft auf den Bildschirm ausüben, wodurch das Verändern des Schwenkwinkels relativ mühsam ist.

Die Erfindung zielt darauf ab, eine Vorrichtung bereitzustellen, bei der ein gewünschter Schwenkwinkel zwischen dem Stützelement und dem Wandelement auf zuverlässige und einfache Weise realisiert werden kann.

Dieses Ziel wird von der erfindungsgemäßen Vorrichtung dadurch erreicht, dass diese Vorrichtung mit einem bezüglich des Wandelements und des Stützelements verschiebbaren Schlitten versehen ist, der mit einer Mehrzahl von Aussparungen versehen ist, wobei der Schlitten bezüglich der Winkeleinstellaussparungen von einer ersten Position, in der die Aussparungen und die Winkeleinstellaussparungen aufeinander ausgerichtet sind, in eine zweite Position, in der der Schlitten die Verbindung zwischen Verbindungsarm und Winkeleinstellaussparungen verhindert, und umgekehrt, verschoben werden kann.

Indem gegen den Bildschirm gedrückt wird, wird der Verbindungsarm einfach in eine niedriger gelegene Winkeleinstellaussparung verschoben. Beim Ziehen am Bildschirm bleibt der Verbindungsarm zwischen dem Verbindungsarm und der entsprechenden Winkeleinstellaussparung gesichert. Wenn ein größerer gewünschter Schwenkwinkel gewünscht wird, muss der Schlitten erst in die zweite Position gebracht werden, wobei der Schlitten das Verbinden des Verbindungsarms mit den Winkeleinstellaussparungen verhindert. Danach wird das Stützelement in einer kontinuierlichen Bewegung in einen maximal realisierbaren Schwenkwinkel geschwenkt. Bei diesem maximal realisierbaren Schwenkwinkel wird der Schlitten in die erste Position verschoben, wobei die Aussparungen im Schlitten und die Winkeleinstellaussparungen aufeinander ausgerichtet werden. Aus diesem Zustand der Vorrichtung, bei der das Stützelement einen maximal realisierbaren Schwenkwinkel mit dem Wandelement mit einem zwischen dem Wandelement und dem Stützelement vorspringenden Verbindungselement bildet, kann der Schwenkwinkel schrittweise verkleinert werden, indem gegen den Bildschirm gedrückt wird.

Ein Vorteil einer solchen Vorrichtung ist, dass das Stützelement nicht unter dem Einfluss der Schwerkraft ungewünscht bezüglich des Wandelements schwenken kann, während außerdem die zum Verkleinern des Schwenkwinkels erforderliche Kraft relativ gering ist.

Eine Ausführungsform der erfindungsgemäßen Vorrichtung ist dadurch gekennzeichnet, dass der Schlitten mit Hilfe des Verbindungsarms aus der ersten Position in die zweite Position und umgekehrt verschoben werden kann.

Dadurch ist der Verbindungsarm sowohl zum Einstellen des gewünschten Verbindungsarms als auch zum Verschieben des Schlittens erforderlich, wodurch die Anzahl der für die Vorrichtung notwendigen Teile relativ begrenzt ist.

Eine andere Ausführungsform der erfindungsgemäßen Vorrichtung ist dadurch gekennzeichnet, dass der Schlitten im Bereich mindestens eines Endes mit einem Vorsprung versehen ist, wobei der Verbindungsarm zum Verschieben des Schlittens von der ersten in die zweite Position und umgekehrt in Eingriff gebracht werden kann.

Durch den Vorsprung kann die Position des Schlittens einfach verändert werden.

Eine weitere Ausführungsform der erfindungsgemäßen Vorrichtung ist dadurch gekennzeichnet, dass das Wandelement mit dem Schlitten versehen ist, wodurch der Verbindungsarm mit einem vom Wandelement abgewandten Ende gelenkig um eine Gelenkachse mit dem Stützelement verbunden ist.

Auf diese Weise ist der Aufbau des mit dem Bildschirm zu verbindenden Stützelements relativ einfach, wodurch das Stützelement an nahezu jeder Stelle am Bildschirm befestigt werden kann.

Eine weitere Ausführungsform der erfindungsgemäßen Vorrichtung ist dadurch gekennzeichnet, dass die Gelenkachse im Betrieb höher liegt als das Ende des Verbindungsarms, welches sich im Eingriff mit dem Wandelement befindet.

Auf diese Weise wird einfach sichergestellt, dass beim Drücken gegen den Bildschirm der Verbindungsarm auch unter dem Einfluss der Schwerkraft in eine niedriger gelegene Winkeleinstellaussparung verschoben wird.

Eine weitere Ausführungsform der erfindungsgemäßen Vorrichtung ist dadurch gekennzeichnet, dass das Wandelement mit einer an der Wand zu befestigenden Wandplatte verbunden werden kann, wobei vor dem Verbinden des Wandelements mit der Wandplatte der Verbindungsarm gelenkig in eine vom Wandelement entkoppelte Position gebracht werden kann.

Auf diese Weise kann der Verbindungsarm vom Wandelement entkoppelt werden, wobei das Stützelement auf einfache Weise am Bildschirm befestigt werden kann. Nach dem Befestigen des Stützelements am Bildschirm kann der Verbindungsarm mit dem Wandelement verbunden werden, wonach das Wandelement an der Wand befestigt werden kann.

Die Erfindung betrifft auch eine Vorgehensweise zum Schwenken eines mit einem Bildschirm versehenen Stützelements auf zuverlässige und einfache Weise bezüglich eines Wandelements.

Bei der erfindungsgemäßen Vorgehensweise wird dies dadurch erreicht, dass das Stützelement schrittweise hin zu einem kleineren Schwenkwinkel verschoben wird, wobei zum Vergrößern des Schwenkwinkels das Stützelement zuerst in einen mindestens realisierbaren Schwenkwinkel geschwenkt wird, und danach in einer kontinuierlichen Schwenkbewegung in den maximal realisierbaren Schwenkwinkel geschwenkt wird, um danach schrittweise in den gewünschten Schwenkwinkel geschwenkt zu werden.

Auf diese Weise ist die zum Verkleinern des Schwenkwinkels erforderliche Kraft relativ gering, während auf zuverlässige Weise verhindert wird, dass sich der Schwenkwinkel unter dem Einfluss der Schwerkraft unerwünscht vergrößert.

Die Erfindung wird anhand der Zeichnungen näher beschrieben, in denen
Fig. 1a-1c eine Seitenansicht mit Bildschirm, eine Perspektivansicht ohne Bildschirm sowie eine vergrößerte Detailansicht einer erfindungsgemäßen Vorrichtung mit einem maximal realisierbaren Schwenkwinkel zeigen;
Fig. 2a-2c eine Seitenansicht mit Bildschirm, eine Seitenansicht ohne Bildschirm und eine vergrößerte Detailansicht der in Fig. 1a-1c gezeigten Vorrichtung in einer zweiten Schwenkwinkelposition zeigen;
Fig. 3a-3c eine Seitenansicht mit Bildschirm, eine Seitenansicht ohne Bildschirm und eine vergrößerte Detailansicht der in Fig. 1a-1c gezeigten Vorrichtung in einer dritten Schwenkwinkelposition zeigen;
Fig. 4a-4c eine Seitenansicht mit Bildschirm, eine Seitenansicht ohne Bildschirm und eine vergrößerte Detailansicht der in Fig. 1a-1c gezeigten Vorrichtung in einer vierten Schwenkwinkelposition zeigen, wobei die vierte Schwenkwinkelposition der mindestens realisierbare Schwenkwinkel ist.
In den Figuren wurden übereinstimmende Teile mit denselben Bezugszahlen versehen.

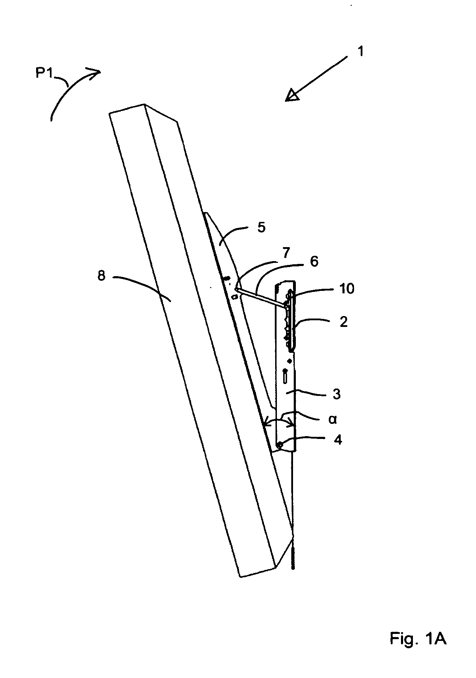

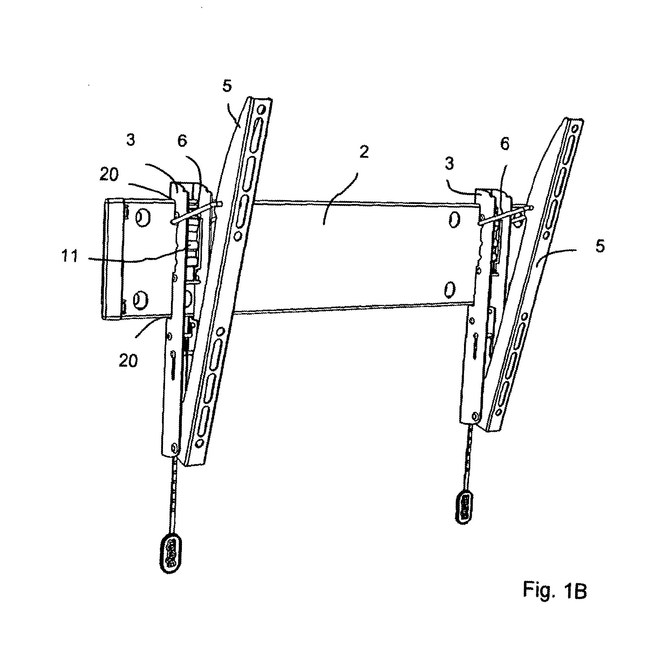

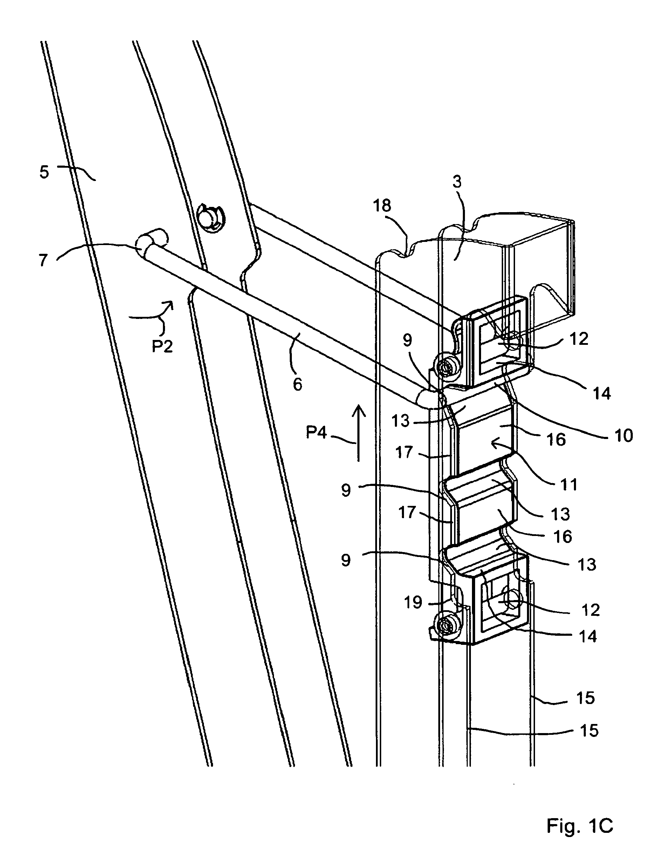

Fig. 1a-1c zeigen jeweils eine Seitenansicht, eine Perspektivansicht und eine vergrößerte Detailansicht einer Vorrichtung 1 gemäß der Erfindung, die mit einer an der Wand befestigten (nicht gezeigten) Wandplatte 2, einem damit verbundenen Wandelement 3, einem um eine Schwenkachse 4 schwenkbar mit dem Wandelement 3 verbundenen Stützelement 5 und einem Verbindungsarm 6 versehen ist. Der Verbindungsarm 6 ist um eine Gelenkachse 7 gelenkig mit dem Stützelement 5 verbunden. Die Verbindung zwischen dem Verbindungsarm 6 und dem Wandelement 3 soll im Folgenden anhand von Fig. 1c ausführlicher beschrieben werden. Am Stützelement 5 ist ein Bildschirm 8, wie beispielsweise ein Plasmabildschirm oder ein LCD-Bildschirm, befestigt. Zur Befestigung des Bildschirms 8 ist, wie in Fig. 1b deutlich sichtbar, eine einzelne Wandplatte 2 an einer Wand befestigt, mit der zwei Wandelemente 3 mit schwenkbar damit verbundenen Stützelementen 5 verbunden sind. Auf diese Weise wird eine stabile Stützung 5 des Bildschirms 8 erhalten. Es ist aber auch möglich, nur ein einziges Wandelement 3 oder mehr als zwei Wandelemente 3 vorzusehen.

Wie in Fig. 1c deutlich zu sehen, umfasst das Wandelement 3 an der vom Stützelement abgewandten Seite eine Vielzahl von Winkeleinstellaussparungen 9, in die eine Verbindungsstange 10 des Verbindungsarms 6 positioniert werden kann. Das Wandelement 3 ist ferner mit einem Schlitten 11 versehen, der im Bereich beider Enden verschiebbar bezüglich von mit dem Wandelement 3 verbundenen Stiften 12 gelagert ist. Der Schlitten 11 ist mit einer Vielzahl von Aussparungen 13 versehen, die bei der in Fig. 1c gezeigten ersten Position des Schlittens 11 mit den Winkeleinstellaussparungen 9 im Wandelement 3 ausgerichtet sind. Der Schlitten 11 ist im Bereich der beiden Enden mit Anschlagsflächen 14 versehen, die sich bis zur selben Höhe erstrecken, wie die Seiten 15 des Wandelements 3. Zwischen den Aussparungen 13 ist der Schlitten 11 mit Flächen 16 versehen, die sich auf derselben Höhe befinden, wie die zwischen den Winkeleinstellaussparungen 9 gelegenen Seiten 17 des Wandelements 3.

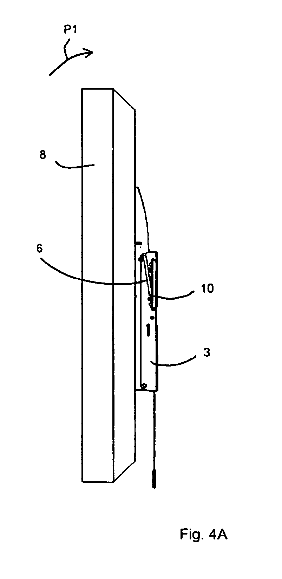

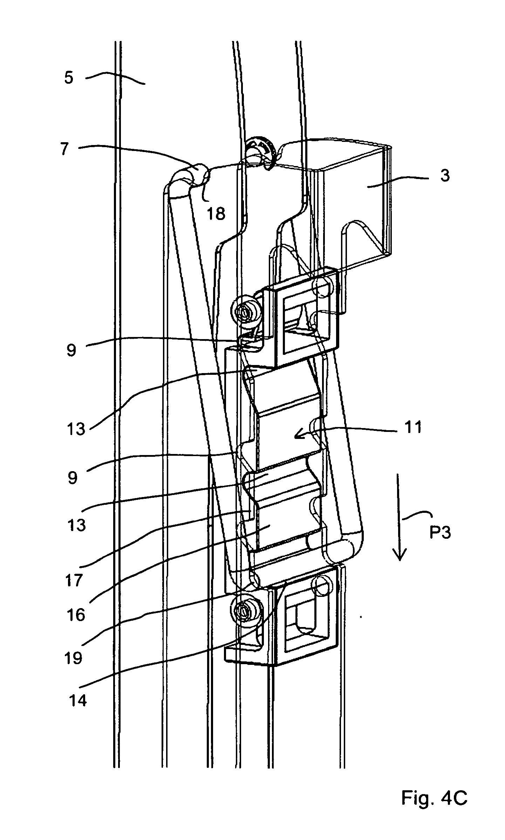

Das Wandelement 3 ist im Bereich der Oberseite ferner mit Einkerbungen 18 versehen, deren Funktion anhand von Fig. 4c näher erläutert werden soll.

Die Art und Weise des Befestigens des Bildschirms an der Vorrichtung 1 und des Einstellens des Schwenkwinkels α zwischen dem Wandelement 3 und dem Stützelement 5 wird nun anhand der Figuren näher erläutert.

Zum Befestigen des Stützelementes 5 am Bildschirm 8 wird bei einem von der Wandplatte 2 gelösten Wandelement 3 das Stützelement 5 soweit in die durch den Pfeil P1 angezeigte Richtung zum Wandelement 3 geschwenkt, dass der Verbindungsarm 6 um die Gelenkachse 7 in der durch den Pfeil P2 angegebenen Richtung in eine vom Wandelement 3 gelöste Position geschwenkt werden kann. Das Stützelement 5 kann danach um die Schwenkachse 4 in eine dem Pfeil P1 entgegen gesetzte Richtung geschwenkt werden, bis das Stützelement 5 und das Wandelement 3 in Verlängerung zueinander nah genug beieinander liegen. In diesem Zustand des Stützelements 5 und des Wandelements 3 kann das Stützelement 5 einfach mit einem Bildschirm 8 verbunden werden. Nachdem eine gewünschte Anzahl von Stützelementen 5, wie beispielsweise zwei, mit dem Bildschirm 8 verbunden sind, wird jedes Stützelement 5 um die Schwenkachse 4 in eine Position geschwenkt, wodurch der Verbindungsarm 6 mit einer Winkeleinstellaussparung 9 des Wandelements 3 verbunden ist. Die Wandelemente 3 werden nun mit hakenförmigen Enden 20 (siehe Fig. 1 b) mit der Wandplatte 2 verbunden. Die Verbindungsstange 10 wird hierbei in einem von der Wandplatte 2 und dem Vorsprung 14 begrenzten Raum eingeschlossen.

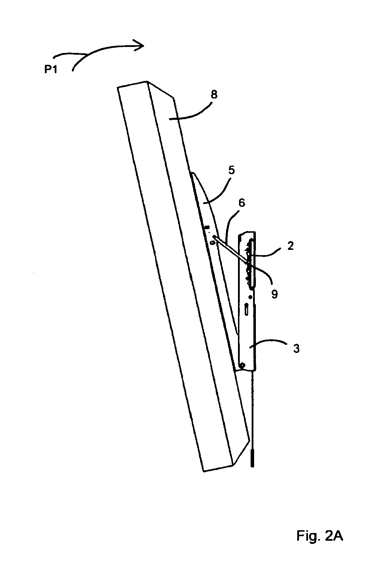

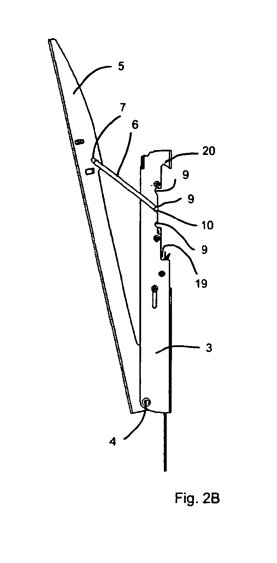

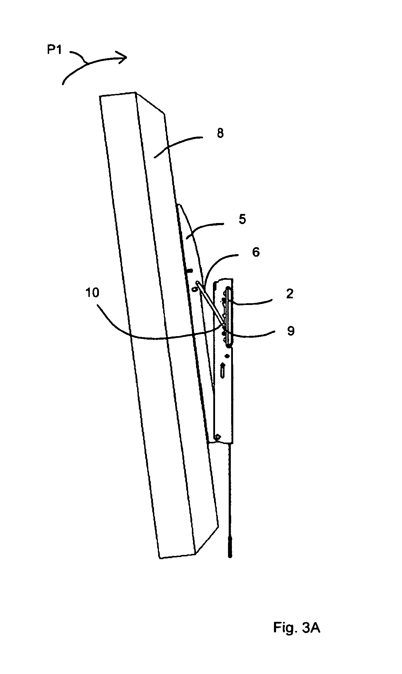

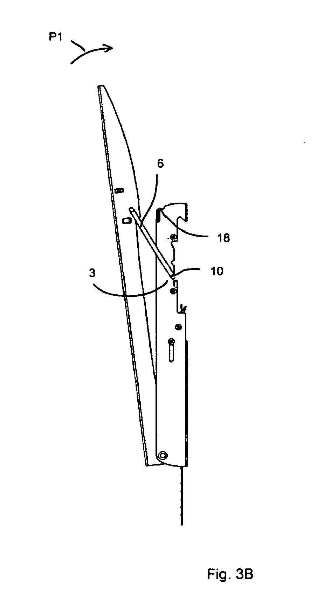

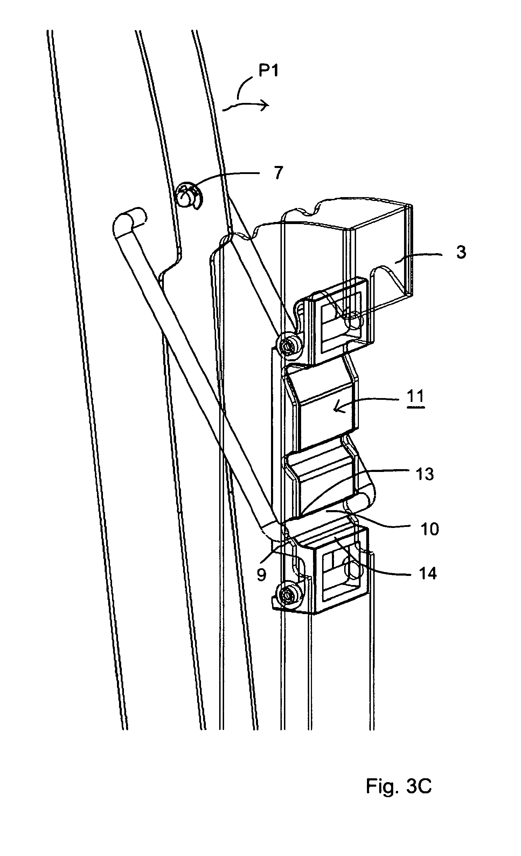

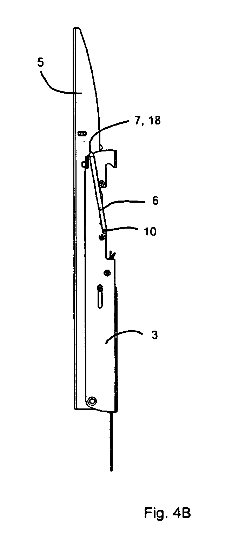

Fig. 1a-1c zeigen einen ersten Zustand des Stützelements 5, wobei bei einer zwischen dem Stützelement 5 und dem Wandelement 3 vorhandenen Verbindungsstange 6 der maximal realisierbare Schwenkwinkel α zwischen dem Stützelement 5 und dem Wandelement 3 vorliegt. Der Schlitten 11 befindet sich hierbei in einer ersten Position, bei der die Aussparungen 13 mit den Winkeleinstellaussparungen 9 im Wandelement 3 ausgerichtet sind. Um den Schwenkwinkel α zu verkleinern, übt ein Nutzer eine Kraft in der durch den Pfeil P1 angezeigten Richtung gegen den Bildschirm 8 aus, wodurch die Verbindungsstange 10 aus dem Eingriff mit der Winkeleinstellaussparung 9 gebracht wird und über die Fläche 16 und die Seiten 17 in eine darunter gelegene Winkeleinstellaussparung 9 verschoben wird. Wenn der Nutzer den Bildschirm 8 danach loslässt, wird die Verbindungsstange 10 durch den Einfluss der Schwerkraft mit dieser Winkeleinstellaussparung 9 in Eingriff gebracht. In Fig. 2a-2c liegt die Verbindungsstange 10 in der zweiten Winkeleinstellaussparung 9 von oben, wobei sich das Stützelement 5 in der zweiten Schwenkwinkelposition befindet. Indem nochmals gegen den Bildschirm 8 gedrückt wird, kann die Verbindungsstange 10 in die von oben gesehen dritte Winkeleinstellaussparung 9 gebracht werden, um den Schwenkwinkel in eine dritte Schwenkwinkelposition einzustellen (siehe Fig. 3a-3c). Wenn aus diesem Schwenkwinkel wiederum gegen den Bildschirm 8 gedrückt wird, liegt die Verbindungsstange 10 gegen den Vorsprung 14 an, wobei durch das weitere Schwenken des Bildschirms 8 in Pfeilrichtung P1 und des Stützelements 5 durch die Verbindungsstange 10 eine abwärts gerichtete Kraft auf den Vorsprung 14 des Schlittens 11 ausgeübt wird, in deren Folge der Schlitten 11 in die durch den Pfeil P3 angezeigte Richtung in die in Fig. 4c gezeigte zweite Position geschoben wird. In dieser zweiten Position liegt die Verbindungsstange 10 in der Winkeleinstellaussparung 19 des Wandelementes 3, welche Winkeleinstellaussparung 19 näher an der Wandplatte 2 liegt als die übrigen Winkeleinstellaussparungen 9. Hierdurch kann das Stützelement 5 sich gleichmäßig am Wandelement 3 erstrecken (siehe Fig. 4b). In dieser Position liegt die Schwenkachse 7 in der Einkerbung 18, wodurch das Schwenken des Bildschirms 8 in eine Richtung, die der Richtung des Pfeils P1 entgegengesetzt ist, auf einfache Weise verhindert wird. Die Einkerbung 18 ist gleichsam ein Mittel zum Verriegeln des Stützelements 5 bezüglich des Wandelements 3. Um die Positionierung der Schwenkachse 7 in die Einkerbung 18 zu ermöglichen, erfährt das Stützelement 5 eine geringe Verschiebung in der durch den Pfeil P3 gezeigten Richtung bezüglich des Wandelements 3. Diese geringe Verschiebung ist möglich, da im Bereich der Schwenkachse 4 einiger Spielraum zwischen dem Stützelement 5 und dem Wandelement 3 vorhanden ist.

Indem der Schlitten 11 in die durch den Pfeil P3 gezeigte Richtung geschoben wird, sind die Winkeleinstellaussparungen 9 und die Aussparungen 13 nicht mehr aufeinander ausgerichtet, wodurch die Winkeleinstellaussparungen 9 durch die zwischen den Aussparungen 13 gelegenen Flächen 16 abgedeckt sind. Die Aussparungen 13 sind durch die Flanken 17 abgeschlossen.

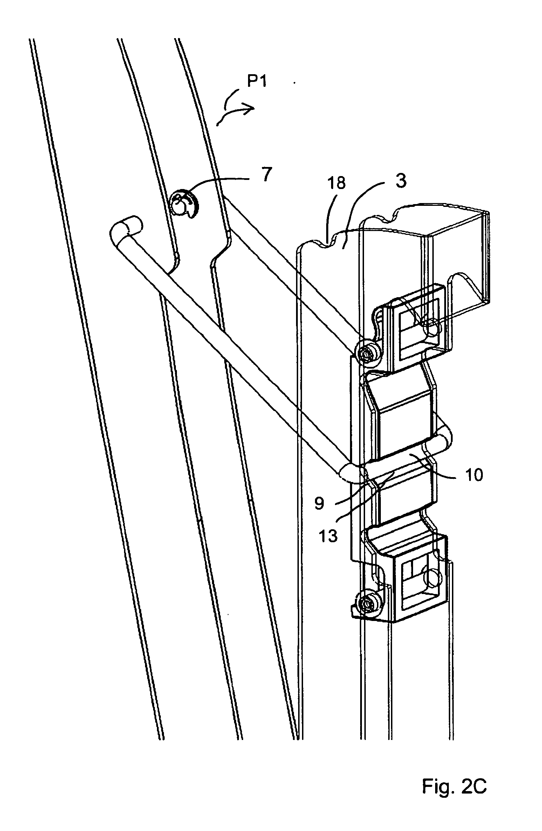

Wenn ein Nutzer den Bildschirm in einer dem Pfeil P1 entgegen gesetzte Richtung zu schwenken wünscht, dann zieht der Nutzer am Bildschirm 8, wodurch die Schwenkachse 7 aus der Einkerbung 18 gekippt wird, wonach die Verbindungsstange 10 über die Flanken 17 des Wandelements 3 und die darauf ausgerichteten Flächen 16 des Schlittens 11 in einer kontinuierlichen Bewegung in eine durch den Pfeil P3 gezeigte Richtung verschoben werden. Wenn die Verbindungsstange 10 an dem im Bereich der Oberseite des Wandelements 3 gelegenen Vorsprung 14 anliegt, wird der Schlitten 11 in der durch den Pfeil P4 (siehe Fig. 1c) gezeigten Richtung in die erste Position verschoben. In dieser ersten Position des Schlittens 11 sind die Winkeleinstellaussparungen 9 und die Aussparungen 13 wieder fluchtend zueinander ausgerichtet. Aus diesem maximal realisierbaren Schwenkwinkel α kann danach wieder zueinander ein kleinerer Schwenkwinkel, wie in Fig. 2c, 3c und 4c gezeigt, realisiert werden.

Der Schlitten 11 kann auch im Stützelement 5 vorgesehen sein, wobei der Verbindungsarm 6 um eine Gelenkachse gelenkig mit dem Wandelement 3 verbunden wird. Die Schwenkachse muss hierbei auch höher liegen als die in den Winkeleinstellaussparungen liegende Verbindungsstange 10 des Verbindungsarms 6.

Bei der in den Figuren gezeigten Vorrichtung können vier Schwenkwinkel realisiert werden. Es ist jedoch auch möglich, durch Anpassen der Anzahl von Winkeleinstellaussparungen 9 und Aussparungen 13 die Anzahl von Schwenkwinkeln zu verkleinern oder zu vergrößern.

Der Schlitten kann mit einem oder mehreren weiteren Mitteln versehen sein, mit deren Hilfe der Schlitten in der ersten oder zweiten Position liegt, nicht aber in der dazwischen liegenden Position stehen bleiben kann, außer beim beabsichtigten Verschieben zwischen beiden Positionen.

Der Verbindungsarm kann auch mit einer Feder versehen sein, mit deren Hilfe der Verbindungsarm in einen im Eingriff mit dem Schlitten stehenden Zustand gedrückt wird.

Der Schlitten kann auch per Hand oder auf andere Weise aus der ersten Position in die zweite Position und umgekehrt verschoben werden.

## Patentansprüche

1. Vorrichtung (1), die sich dafür eignet, einen Bildschirm schwenkbar an einer Wand zu befestigen, wobei die Vorrichtung ein an der Wand zu befestigendes Wandelement (3) und ein Stützelement (5) aufweist, an das der Bildschirm befestigt werden kann, wobei das Stützelement (5) um eine Schwenkachse (4) schwenkbar mit dem Wandelement (3) verbunden ist, und wobei die Vorrichtung (1) ferner mit einem schwenkbaren Verbindungsarm (6) versehen ist, wobei ein Ende des Verbindungsarms (6) um eine von diesem Ende beabstandete Gelenkachse (7) schwenkbar is, wobei der Verbindungsarm (6) das Wandelement (3) und das Stützelement von der Schwenkachse (4) beabstandet miteinander verbindet, wobei der Verbindungsarm (6) mit einer Mehrzahl von Winkeleinstellaussparungen (9) zum Einstellen des gewünschten Schwenkwinkels zwischen dem Stützelement (5) und dem Wandelement (3) verbunden werden kann, **dadurch gekennzeichnet, dass** die Vorrichtung (1) mit einem hinsichtlich des Wandelements und des Stützelements verschiebbaren Schlitten (11) versehen ist, der eine Mehrzahl von Aussparungen (13) aufweist, wobei der Schlitten (11) bezüglich der Winkelaussparungen (9) aus einer ersten Position, in der die Aussparungen (13) und die Winkelaussparungen (9) aufeinander ausgerichtet sind, in eine zweite Position, in der der Schlitten (11) die Verbindung des Verbindungsarms (6) mit den Winkelaussparungen (9) verhindert und umgekehrt, verschoben werden kann.

2. Vorrichtung nach Anspruch 1, **dadurch gekennzeichnet, dass** der Schlitten (11) mit Hilfe des Verbindungsarms (6) aus der ersten Position in die zweite Position und umgekehrt verschoben werden kann.

3. Vorrichtung nach Anspruch 1 oder 2, **dadurch gekennzeichnet, dass** der Schlitten (11) im Bereich mindestens eines Endes mit einem Vorsprung versehen ist, mit dem der Verbindungsarm (6) zum Verschieben des Schlittens (11) von der ersten Position in die zweite Position oder umgekehrt in Eingriff gebracht werden kann.

4. Vorrichtung nach einem der vorangegangenen Ansprüche, **dadurch gekennzeichnet, dass** das Wandelement (3) mit dem Schlitten (11) versehen ist, wobei der Verbindungsarm (6) mit einem vom Wandelement (3) abgewandten Ende um eine Gelenkachse (7) angelenkt mit dem Stützelement (5) verbunden ist.

5. Vorrichtung nach Anspruch 4, **dadurch gekennzeichnet, dass** die Gelenkachse (7) in Betrieb höher liegt als das sich mit dem Wandelement (3) in Eingriff befindliche Ende (10) des Verbindungsarms (6).

6. Vorrichtung nach einem der vorhergehenden Ansprüche 4 oder 5, **dadurch gekennzeichnet, dass** das Wandelement (3) mit einer an der Wand zu befestigenden Wandplatte (2) verbunden werden kann, wobei vor dem Verbinden des Wandelements (3) mit der Wandplatte (2) der Verbindungsarm (6) in eine vom Wandelement (3) entkoppelte Position gelenkt werden kann.

7. Vorrichtung nach einem der vorhergehenden Ansprüche, **dadurch gekennzeichnet, dass** die Vorrichtung (1) mit Mitteln zum Verriegeln des Stützelements (5) bezüglich des Wandelements (3) in einem zu realisierenden Mindestschwenkwinkel versehen ist.

8. Vorgehensweise zum Verschwenken eines Stützelements gegenüber einem Wandelement um eine Schwenkachse (4), wobei ein Verbindungsarm, mit dem das Wandelement (3) und das Stützelement (5) von der Schwenkachse (4) beabstandet miteinander verbunden sind, mit einer von einer Mehrzahl von Winkeleinstellaussparungen (9) zum Einstellen des gewünschten Schwenkwinkels (α) zwischen dem Stützelement (5) und dem Wandelement (3) verbunden wird, **dadurch gekennzeichnet, dass** das Stützelement (5) schrittweise zu einem kleineren Schwenkwinkel (α) verschoben wird, wobei vor dem Vergrößern des Schwenkwinkels (α) das Stützelement (5) erst in den mindestens realisierbaren Schwenkwinkel (α) geschwenkt wird und dann in einer kontinuierlichen Schwenkbewegung in einen maximal realisierbaren Schwenkwinkel (α) geschwenkt wird, um danach schrittweise in den gewünschten Schwenkwinkel (α) geschwenkt zu werden, und dass beim Schwenken des Stützelements (5) in den mindestens realisierbaren Schwenkwinkel (α) ein Schlitten (11) in die Richtung der Schwenkachse (4) verschoben wird, wodurch die Winkeleinstellaussparungen (9) abgedeckt werden, während beim Schwenken des Stützelements (5) in den maximal realisierbaren Schwenkwinkel (α) der Schlitten (8) in eine von der Schwenkachse (4) abgewandte Richtung geschoben wird, wodurch die Winkeleinstellsaussparungen (9) frei-gegeben werden.

## Claims

1. Apparatus (1) which is suitable for fixing a screen tiltably to a wall, said apparatus possessing a wall element (3) designed to be fixed to the wall and a supporting element (5) which can be fixed to the screen, said supporting element (5) being connected with the wall element (3) so as to tilt around an axis of rotation (4), said apparatus (1) also possessing a pivoting connecting arm (6), one end of said connecting arm (6) being pivotable around a hinged axis (7) arranged at a distance from this end, whereby the connecting arm (6) connects the wall element (3) and the supporting element at a distance from the axis of rotation (4) and whereby the connecting arm (6) can be connected with a plurality of angle adjustment recesses (9) in order to adjust the desired angle of tilt between the supporting element (5) and the wall element (3), **characterised in that** the apparatus (1) is equipped with a carriage (11) which can be displaced in relation to the wall element and the supporting element and which possesses a plurality of recesses (13), whereby the carriage (11) can be slid, in relation to the angle adjustment recesses (9), from a first position, in which the recesses (13) and the angle adjustment recesses (9) are aligned together, into a second position, in which the carriage (11) prevents the connection of the connecting arm (6) with the angle adjustment recesses (9), and vice versa.

2. Apparatus according to claim 1, **characterised in that** the carriage (11) can be slid with the aid of the connecting arm (6) from the first position into the second position and vice versa.

3. Apparatus according to claim 1 or 2, **characterised in that** the carriage (11) possesses a projection in the region of at least one of its ends with which the connecting arm (6) can be brought to engage in order to slide the carriage (11) from the first position into the second position or vice versa.

4. Apparatus according to one of the preceding claims, **characterised in that** the carriage (11) is provided on the wall element (3), whereby the connecting arm (6) is connected, on an end facing away from the wall element (3), with the supporting element (5), so as to articulate around a hinged axis (7).

5. Apparatus according to claim 4, **characterised in that**, in operation, the hinged axis (7) is higher than the end (10) of the connecting arm (6) engaging with the wall element (3).

6. Apparatus according to one of the preceding claims 4 or 5, **characterised in that** the wall element (3) can be connected with a wall plate (2) designed to be fixed to the wall, whereby before the wall element (3) is connected with the wall plate (2), the connecting arm (6) can be swung into a position in which it is decoupled from the wall element (3).

7. Apparatus according to one of the preceding claims, **characterised in that** the apparatus (1) possesses means for locking the supporting element (5) in a minimum angle of tilt in relation to the wall element (3).

8. Procedure for pivoting a supporting element relative to a wall element around an axis of rotation (4), whereby a connecting arm, with which the wall element (3) and the supporting element (5) are connected at a distance from the axis of rotation (4), is connected with one of a plurality of angle adjustment recesses (9) in order to adjust the desired angle of tilt (α) between the supporting element (5) and the wall element (3), **characterised in that** the supporting element (5) is moved, in steps, to a lesser angle of tilt (α), whereby before the angle of tilt (α) is increased the supporting element (5) is first pivoted to the minimum realisable angle of tilt (α) and is then pivoted in a continuous pivoting movement to a maximum realisable angle of tilt (α), in order then to be pivoted, in steps, to the desired angle of tilt (α), and that when the supporting element (5) is tilted to the minimum realisable angle of tilt (α) a carriage (11) is slid in the direction of the axis of rotation (4), as a result of which the angle adjustment recesses (9) are covered, whereas when the supporting element (5) is tilted into the maximum realisable angle of tilt (α) the carriage (8) is slid in a direction away from the axis of rotation (4), as a result of which the angle adjustment recesses (9) are exposed.

## Revendications

1. Dispositif (1) approprié à la fixation d'un écran sur un mur de manière pivotante, ledit dispositif comportant un élément mural (3) à fixer sur le mur et un élément d'appui (5) contre lequel l'écran peut être fixé, l'élément d'appui (5) étant raccordé à l'élément mural (3) de manière à pouvoir pivoter autour d'un axe de pivotement (4), et ledit dispositif (1) étant en outre pourvu d'un bras de liaison (6) pivotant, une extrémité du bras de liaison (6) pouvant pivoter autour d'un axe articulé (7) à distance de ladite extrémité, le bras de liaison (6) reliant l'un à l'autre l'élément mural (3) et l'élément d'appui à distance de l'axe de pivotement (4), le bras de liaison (6) pouvant être raccordé à une pluralité d'encoches de réglage angulaire (9) destinées au réglage de l'angle de pivotement désiré entre l'élément d'appui (5) et l'élément mural (3), **caractérisé en ce que** ledit dispositif (1) est doté d'un chariot (11) mobile relativement à l'élément mural et à l'élément d'appui et comportant une pluralité d'encoches (13), le chariot (11) pouvant être déplacé par rapport aux encoches de réglage angulaire (9), d'une première position où les encoches (13) et les encoches de réglage angulaire (9) sont alignées les unes sur les autres, vers une deuxième position où le chariot (11) empêche la liaison du bras de liaison (6) avec les encoches de réglage angulaire (9), et inversement.

2. Dispositif selon la revendication 1, **caractérisé en ce que** le chariot (11) peut être déplacé de la première position vers la deuxième position, et inversement, au moyen du bras de liaison (6).

3. Dispositif selon la revendication 1 ou la revendication 2, **caractérisé en ce que** le chariot (11) est pourvu d'une saillie dans la zone d'une extrémité au moins, avec laquelle le bras de liaison (6) peut être mis en prise pour déplacer le chariot (11) de la première position vers la deuxième position, et inversement.

4. Dispositif selon l'une des revendications précédentes, **caractérisé en ce que** l'élément mural (3) est pourvu du chariot (11), le bras de liaison (6) étant raccordé à l'élément d'appui (5) par une extrémité à distance de l'élément mural (3), de manière articulée autour d'un axe d'articulation (7).

5. Dispositif selon la revendication 4, **caractérisé en ce que** l'axe d'articulation (7) est en service situé plus haut que l'extrémité (10) du bras de liaison (6) en prise avec l'élément mural (3).

6. Dispositif selon l'une des revendications 4 ou 5, **caractérisé en ce que** l'élément mural (3) peut être raccordé à une plaque murale (2) à fixer contre le mur, le bras de liaison (6) pouvant être amené dans une position de désaccouplement de l'élément mural (3) avant raccordement de l'élément mural (3) à la plaque murale (2).

7. Dispositif selon l'une des revendications précédentes, **caractérisé en ce que** ledit dispositif (1) est doté de moyens de verrouillage de l'élément d'appui (5) par rapport à l'élément mural (3) suivant un angle de pivotement minimal réalisable.

8. Procédé de pivotement d'un élément d'appui autour d'un axe de pivotement (4) relativement à un élément mural, un bras de liaison par lequel l'élément mural (3) et l'élément d'appui (5) sont reliés l'un à l'autre à distance de l'axe de pivotement (4) étant raccordé à une pluralité d'encoches de réglage angulaire (9) destinées au réglage de l'angle de pivotement (α) désiré entre l'élément d'appui (5) et l'élément mural (3), **caractérisée en ce que** l'élément d'appui (5) est graduellement ramené à un angle de pivotement (α) inférieur, l'élément d'appui (5) étant avant augmentation de l'angle de pivotement (α) pivoté suivant l'angle de pivotement (α) minimal réalisable, puis suivant l'angle de pivotement (α) maximal réalisable par un mouvement de pivotement continu, avant d'être ensuite graduellement pivoté vers l'angle de pivotement (α) désiré, et **en ce que**, lors du pivotement de l'élément d'appui (5) vers l'angle de pivotement (α) minimal réalisable, un chariot (11) est déplacé en direction de l'axe de pivotement (4), les encoches de réglage angulaire (9) étant alors occupées, cependant que, lors du pivotement de l'élément d'appui (5) vers l'angle de pivotement (α) maximal réalisable, le chariot (11) est déplacé dans une direction opposée à l'axe de pivotement (4), les encoches de réglage angulaire (9) étant alors libérées.
